# EUROPEAN PATENT APPLICATION

(11) **EP 2 351 482 A1**
(43) Date of publication of application: **03.08.2011**
(21) Application number: 08877524.2
(22) Date of filing: 20.10.2008
(51) Int. Cl.: A01G 31/00

(54) **METHOD OF HYDROPONICALLY CULTIVATING PLANT**

(71) Applicant: Fairy Plant Technology Inc., Demizu-dori, Kamigyo-ku Kyoto-shi Kyoto 602-8012 (JP)
(72) Inventor: EMOTO, Kenji, Kyoto-city Kyoto 603-8051 (JP)
(74) Representative: Müller - Hoffmann & Partner
(86) International application number: PCT/JP2008/068937
(87) International publication number: WO 2010/046958

(57) **Abstract**

A method of hydroponically cultivating a plant wherein a nutrient solution is supplied under careful control depending on the growth conditions of the plant so that the nutritional state of the plant can be improved and the total usage of the nutrient solution can be reduced, which comprises: cultivating the plant without replenishing a fresh nutrient solution at an initial cultivation stage; continuing the cultivation with the fresh nutrient solution replenished by an amount compensating for the spontaneous loss in the nutrient solution at a medium cultivation stage; and then conducting the cultivation with supplying the fresh nutrient solution by an amount exceeding the spontaneous loss in the nutrient solution at a later cultivation stage. The amount of the nutrient solution replenished at the later cultivation stage is increased as the cultivation proceeds.

## Description

### FIELD OF THE ART

This invention is a method for supplying a hydroponically cultivating plant with a nutrient solution and relates to a method that can improve a nutritional state of the plant and reduce a total usage of the nutrient solution by sensitively controlling the supplied nutrient solution tailored to the growth conditions of the plant

### BACKGROUND ART

Conventionally, plants are cultivated in a plant cultivation facility such as a plant factory where a plurality of cultivation tables comprising cultivation shelves vertically stacked in multiple steps are arranged, and the light is irradiated on the plant by an artificial illuminating unit arranged on a top part of each cultivation shelf so as to maintain a temperature and humidity condition in whole of the room appropriately for cultivating the plant. The cultivation of the multiple steps is preferable for effectively utilizing a space in a limited room.

In case of conducting the cultivation in the plant cultivation facility, in order to effectively supply multiple cultivation shelves with a nutrient solution, the cultivation shelves are arranged in parallel to the nutrient solution supply device and the nutrient solution is supplied to each cultivation shelf from the tank in a lump so as to give a nutrient element to the plant, and then a waste solution discharged from each cultivation shelf is collected into the tank, and its a component is adjusted arbitrarily and the adjusted nutrient solution is again distributed to each cultivation shelf as the nutrient solution (patent document 1).
Patent document 1: Japan patent laid-open number 2005-21065

### DISCLOSURE OF THE INVENTION

### PROBLEMS TO BE SOLVED BY THE INVENTION

The system that prepares the nutrient solution and supplies the nutrient solution to multiple cultivation shelves in a lump with circulating the nutrient solution is efficient However, with this system, the same nutrient element is given to the plant in a different growing state so that this system is not suitable for conducting a sensitive control tailored to a growth state of the plant. In addition, in case that a disease happens, there is a possibility of infecting the disease all over the plant cultivation facility.

In addition, plants takes nitrogen as a form of an nitric acid, however, if nitrogen is given to the plant much more than a necessary amount, the nitric acid is accumulated in a body of the plant. If the nitrate nitrogen is absorbed by a human body, the nitrate nitrogen is reduced to nitrite nitrogen and combined with hemoglobin so as to form methemoglobin in the human body. As a result, an anoxia (methemoglobinemia) might be caused. Since the inside of stomach and intestines especially for infant is weak in degree of acidity, nitrate nitrogen reduction is easily caused by microscopic organism in the stomach and intestines so that the infant is easily affected by methemoglobinemia (Maynard et al., 1976).

Then, a measure to prevent accumulation of nitrate nitrogen is required also in case of cultivating plants in a plant cultivation facility such as a plant factory.

The present claimed invention is derived in view of the above-mentioned problems, and a main object of this invention is to provide a method of hydroponically cultivating a plant that can improve a nutritional condition of the plant, reduce a total usage of the nutritional solution, and spread a risk at a time when a disease prevails by sensitively controlling the nutrient solution supplied to the plant tailored to a growth state of the plant.

### MEANS TO SOLVE THE PROBLEMS

More specifically, a method of hydroponically cultivating a plant in accordance with this invention is a method of hydroponically cultivating a plant to supply the plant with a nutrient solution, and the plant is cultivated without replenishing a fresh nutrient solution at an initial cultivation stage, the cultivation is conducted with the fresh nutrient solution replenished by an amount compensating for a spontaneous loss in the nutrient solution at a medium cultivation stage, and then the cultivation is conducted with the fresh nutrient solution replenished by an amount exceeding the spontaneous loss in the nutrient solution at a later cultivation stage, and is characterized by that the amount of the nutrient solution replenished at the later cultivation stage is increased as the cultivation proceeds.

Generally, processes of cultivating the plant from a seed to a state of being able to harvest comprises; (1) a sowing process; lay the seeds on a bed (urethan, rock wool or the like), moisturize the bed with a little fertilizer applied and leave the bed for about 6 to 14 days, (2) a raising of seedling process; separate an interval between individual seedlings in about 5 to 7 cm and roots of the plant are dipped in a place where a culture solution is circulated so as to grow the plant, and (3) a fixing planting process; plant seedlings that has grown to about 10 to 15 cm on a harvestry line and grow the seedlings for 14 to 16 days and harvest the plant. This invention is applied to a period between the raising of seedling process and the fixing planting process, or to a period of the fixing planting process.

With this invention of the above-mentioned arrangement, since it is possible to sensitively control the nutrient solution to be supplied to the plant tailored to a growth state of the plant, a nutritional state of the plant can be remarkably improved compared with a conventional method of supplying the nutrient solution in a lump and a necessary total amount of the nutrient solution used from an initiation of cultivation to the harvest can be reduced compared with a conventional method of supplying the nutrient solution in a lump. In addition, since the nutrient state of the plant is improved, the taste of the plant is also improved dramatically if the plant is for food.

In order to replenish the fresh nutrient solution in an amount exceeding the spontaneous loss at the later cultivation stage, it is preferable that the amount of the nutrient solution is adjusted by compulsorily discharging the nutrient solution.

In order to make it easy to adjust the amount of the nutrient solution, it is preferable that the nutrient solution is supplied to the plant while circulating the nutrient solution, a plurality of tanks are arranged on a flow channel for circulation of the nutrient solution, and the nutrient solution is discharged from the tank locating at the most upstream side, and the fresh nutrient solution is replenished to the tank locating at the most downstream side among a plurality of the tanks.

In addition, in order to prevent a case that a disease-causing bacteria proliferates all over the plant cultivation facility through the nutrient solution at a time when a disease happens, it is preferable that the fresh nutrient solution replenished to the tank locating at the most downstream side is replenished from a nutrient solution preparing device through a flow channel different from the above-mentioned flow channel for circulation of the nutrient solution.

With this invention, it becomes possible to conduct a sensitive nutrition control tailored to a growth state of the plant, however, it is furthermore preferable that only water is supplied to the plant that has been grown enough and is about to be harvested. With this arrangement, it is possible to consume the nitrate nitrogen accumulated in the body of the plant so that a concentration of nitrate nitrogen can be reduced. In addition, it is possible to omit a cleaning process at a time of harvest of the plant

Furthermore, it is preferable to comprise a process of leaving the above-mentioned plant about to be harvested as it is for a while after the water is discharged, next to the process of supplying only water to the plant. With this arrangement, since the plant absorbs moisture that attaches to the plant by itself, there is no need of additionally draining so that it is possible to prevent water dripping from the plant The duration of leaving the plant is not especially limited, however, about one day is preferable.

On the occasion of embodying this invention, as a pre-process prior to the initial cultivation stage, ammonia water of a low concentration may be prepared by supplying water and ammonia manually, and the plant may be cultivated by the use of the ammonia water of a low concentration. With the pre-process provided, it is possible to smoothly make a shift to cultivation of the plant by the nutrient solution.

### EFFECT OF THE INVENTION

In accordance with this invention having the above-mentioned arrangement, it is possible to remarkably improve a nutritional state of the plant and to reduce a necessary total amount of the nutrient solution used from an initiation of cultivation to a harvest compared with a conventional method of supplying the nutrient solution in a lump.

### BRIEF DESCRIPTION OF THE DRAWINGS

Fig. 1 is an overall flow channel view of a nutrient solution supply system in accordance with one embodiment of this invention.
Fig. 2 is a perspective view of a shelf unit in accordance with this embodiment.
Fig. 3 is a partially enlarged front view of the shelf unit in accordance with this embodiment

### EXPLANATION OF CODES

- 1: nutrient solution supply system
- 11: flow channel
- 12: first tank
- 13: second tank
- 15: drain
- 21: nutrient solution tank

### BEST MODES OF EMBODYING THE INVENTION

One embodiment of this invention will be explained with reference to drawings.

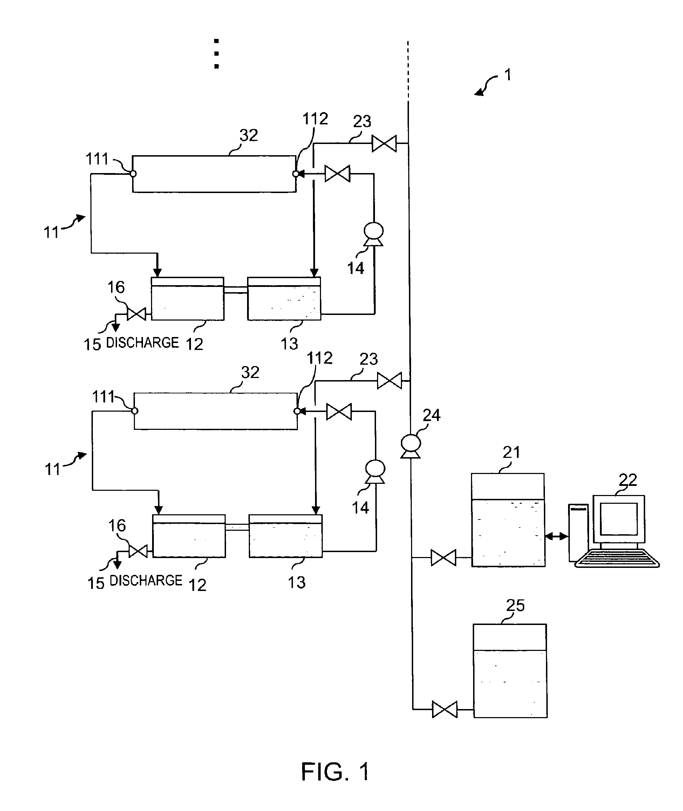

A nutrient solution supply system 1 in accordance with this embodiment is a system for supplying a hydroponically cultivating plant with a nutrient solution, and comprises, as shown in Fig. 1, a flow channel 11 to circulate and supply the nutrient solution to a cultivation shelf 32, a first tank 12 and a second tank 13 that are arranged on the flow channel 11 and that once stores the nutrient solution, and a nutrient solution tank 21 that replenishes a fresh nutrient solution to the second tank 13.

Each part will be described in detail. An upstream end of the flow channel 11 opens on a wall surface of the cultivation shelf 32 as an opening for discharge 111 of the nutrient solution and a downstream end of the flow channel 11 opens on a wall surface of the cultivation shelf 32 as an opening for supply 112 of the nutrient solution. And it is so arranged that the nutrient solution circulates in the cultivation shelf 32 and the flow channel 11.

Concretely, the first tank 12, the second tank 13, a pump 14 are serially connected to the flow channel 11 in this order next to the opening for discharge 111, and the nutrient solution that flows out from the cultivation shelf 32 through the opening for discharge 111 flows into the first tank 12 and is once pooled.

A drain 15 is arranged for the first tank 12. In case of forcibly discharging the nutrient solution once pooled in the first tank 12 , a valve 16 is opened and then the nutrient solution is discharged from the drain 15.

The second tank 13 is connected to a downstream side of the first tank 12. In case that the nutrient solution is stored in the first tank 12 more than or equal to a certain amount, the nutrient solution that exceeds the certain amount flows into the second tank 13.

It is so arranged that the fresh nutrient solution can be replenished to the second tank 13 from the nutrient solution tank 21, and the nutrient solution that flows from the first tank 12 and the fresh nutrient solution replenished from the nutrient solution tank 21 are mixed in the second tank 13. The mixed nutrient solution is sucked by the pump 14 and passes through the flow channel 11 and then is supplied again to the cultivation shelf 32 through the opening for supply 112.

A nutrient element of the mixed nutrient solution supplied to each of the cultivation shelves 32 is consumed by the plant, and then the mixed nutrient solution flows out again from the opening for discharge 111.

The nutrient solution tank 21 is provided with various kinds of sensors, not shown in drawings, and the sensors measure a concentration, a pH and a liquid amount of each component of the nutrient solution.

Each measured data is analyzed by an information processing unit 22 connected to the nutrient solution tank 21. The information processing unit 22 has a CPU, an internal memory, an external memory device such as an HDD, a communication interface such as a modem, a display and an input device such as a mouse and a key board, and conducts a data analysis by operating the CPU and its peripheral devices based on programs set in a predetermined area of the internal memory or the external memory device. The information processing unit 22 may be general-purpose or dedicated.

Then a component of the nutrient solution is adjusted based on the analysis result by the information processing unit 22, and the fresh nutrient solution is prepared in the nutrient solution tank 21. The prepared nutrient solution is sucked by a pump 24 and then replenished to the second tank 13 through a supplying channel 23.

In addition to the nutrient solution tank 21, a water tank 25 is further connected to the supplying channel 23, and the nutrient solution tank 21 and the water tank 25 are placed at rest in a state of being able to be switched by a valve.

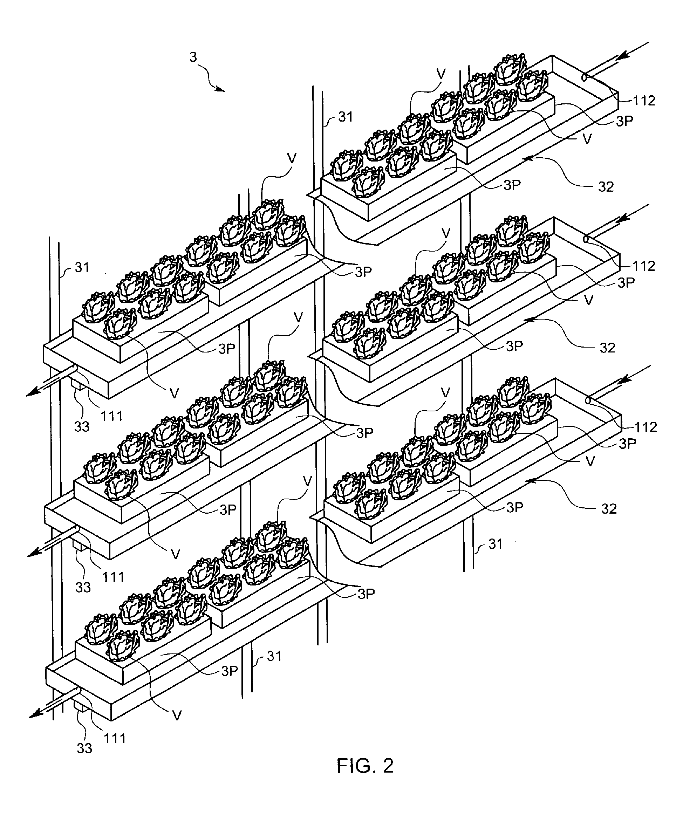

In this embodiment, the cultivation shelves 32 where the nutrient solution is circulated constitute a shelf unit 3 comprising multiple steps of cultivation shelves 32 as shown in Fig. 2, and the shelf unit 3 comprises a plurality of support rods 31, cultivation shelves 32 for growing the plant supported by the support rods 31, and a light irradiation unit 33 to light the plant growing on the cultivation shelves 32. In Fig. 2, the cultivation shelves 32 are arranged only in one side of the support rods 31, however, the cultivation shelves 32 may be arranged in both sides of the support rod 31. In addition, a number of the cultivation shelves 32 planed on one shelf unit 3 is not especially limited, and may be set arbitrarily.

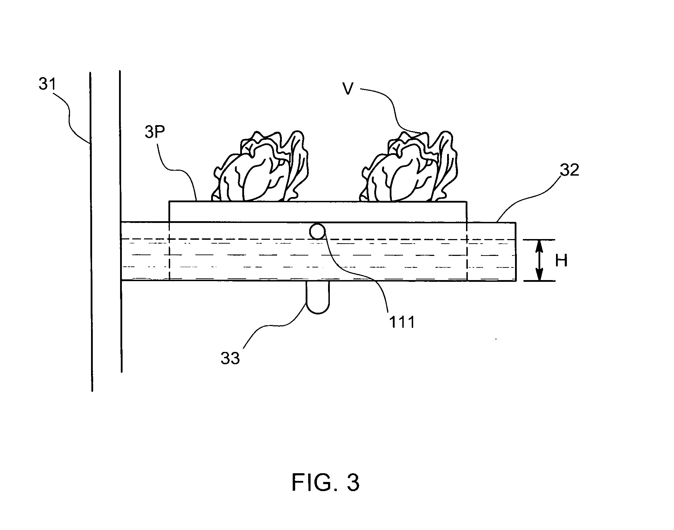

The cultivation shelf 32 is of a general box shape whose upper surface opens so as to place a plurality of palettes 3P for cultivation in a state of being arranged in line. And the opening for supply 112 to take in the nutrient solution is arranged at one end part of the cultivation shelf 32 and the opening for discharge 111 to discharge the nutrient solution that flows inside of the cultivation shelve 32 is arranged at the other end part of the cultivation shelf 32. As shown in Fig. 3, at a time when a liquid surface of the nutrient solution that flows into the cultivation shelf 32 exceeds a predetermined height H, a surplus nutrient solution is discharged from the opening for discharge 111.

A number of the pallet for cultivation 3P that is placed on the cultivation shelf 32 may be changed appropriately tailored to vegetables V to be cultivated. In addition, in this embodiment, a number of the vegetables V is six for each pallet 3P for cultivation, however, it is not especially limited to this.

The light irradiation unit 33 is arranged on a bottom surface of each cultivation shelf 32, and uses, for example, a fluorescent light or a light-emitting diode that emits white light as a light source. In this embodiment, an irradiation cycle and a duty ratio can be controlled by a main device for growth control, not shown in drawings. With this arrangement, it is possible for the light irradiation unit 33 to preferably illuminate the plants during growth on the cultivation shelf 32 locating one step below.

In this embodiment, the nutrient solution that circulates in the nutrition solution supply system 1 is not especially limited, and may be represented by a liquid fertilizer that is obtained by mixing each nutrient element such as, for example, nitrogen, phosphate, potassium, lime, sulfur, iron, boron, manganese, zinc, molybdenum, copper, chlorine, silicon, cobalt, vanadium, aluminum, selenium with water arbitrarily in accordance with a kind or a growth condition of the plant to be cultivated. Depending on the growth condition of the plant, just water may be circulated in the nutrient solution supply system 1.

In case of conducting the hydroponic cultivation of plants by the use of the nutrient solution supply system 1, as a pre-process prior to an initial stage of the cultivation, water and ammonia are supplied to the first tank 12 and the second tank 13, for example, manually, and ammonia water of low concentration is prepared and circulated in the flow channel 11 for about one or two days.

At the initial cultivation stage when about 0 through 3 days pass after the initiation of the cultivation of a seedling by the use of the nutrient solution, a certain amount of the nutrient solution is just circulated without replenishing any nutrient solution with the valve 16 closed and the pump 24 also halted.

In addition, at a medium cultivation stage when about 3 through 10 days pass after the initiation of the cultivation, a fresh nutrient solution whose amount corresponds to a spontaneous loss in the nutrient solution is replenished to the second tank 13 with the valve 16 closed by sucking the nutrient solution from the nutrient solution tank 21 by the use of the pump 24.

Meanwhile, at a later cultivation stage when about 10 days pass after the initiation of the cultivation, an amount of the nutrient solution in the first tank 12 is reduced by opening the valve 16 so as to compulsorily discharge the nutrient solution pooled in the first tank 12, and the fresh nutrient solution of an amount corresponding to a sum of the spontaneous loss in the nutrient solution and the compulsorily discharged amount of the nutrient solution is replenished into the second tank 13 by sucking the fresh nutrient solution from the nutrient solution tank 21 by the use of the pump 24. An amount of the nutrient solution discharged from the first tank 12 is increased and an amount of the fresh nutrient solution replenished to the second tank 13 is also increased in accordance with the passage of days for cultivation.

Furthermore, in case of trying to reduce the containing amount of nitrate nitrogen of the plant about to be harvested, the valve 16 is closed and the pump 24 is halted, water is supplied, for example, manually to the first tank 12 and the second tank 13 from the water tank 25, the water is circulated in the flow channel 11 instead of the nutrient solution, and the plant is cultivated for several days. Then nitrate nitrogen accumulated in a body of the plant is consumed so that it is possible to reduce the containing amount of nitrate nitrogen. In addition, if the plant is cultivated by supplying only water, it is possible to omit a process of cleaning the plant at a time of harvest.

After cultivating the plant with only water supplied, if the plant is left for about one day in a state that the water is discharged from the cultivation shelf 32, the plant absorbs moisture that attaches to the plant by itself As a result, there is no need of additionally draining.

In accordance with this arrangement, it is possible to control a nutritional condition individually and sensitively in accordance with a growth state of the plant for each cultivation shelf 32.

The present claimed invention is not limited to this embodiment.

A number of times to compulsorily discharge the nutrient solution from the first tank 12, and a number of times to replenish the fresh nutrient solution to the second tank 13 is not especially limited, it may be once a day or discharging and replenishing the nutrient solution may be conducted more frequently so as to adjust the nutrient solution more sensitively.

In order to remove a secretion or an impurity originated in the plant from the nutrient solution that circulates in the flow channel 11, a filter, a filtering device or a purifying facility may be arranged on the flow channel 11.

In addition, the first tank 12 and the second tank 13 may be integrated, or an inside of one tank may be divided into two or more by a partition plate so that the tank serves a function as the first tank 12 and the second tank 13. In this case, it is preferable that a height of the partition plate is a little lower than the liquid surface or some numbers of bores are formed on the partition plate in order not to inflow the liquid excessively from the first tank 12 to the second tank 13 or in order not to flow back the fresh nutrient solution replenished to the second tank 13 into the first tank 12 with allowing the liquid to move from the first tank 12 to the second tank 13

Furthermore, the first tank 12 may be further more separated from the second tank 13, or one or more tanks are arranged between the first tank 12 and the second tank 13 in order neither to flow back nor to discharge the fresh nutrient solution replenished to the second tank 13 into the first tank 12.

In addition, this invention is not limited to the above-mentioned each embodiment and a part or all of the above-mentioned various arrangements may be appropriately combined without departing from a spirit of the invention.

### EMBODIMENT

The present claimed invention will be explained further more in detail with reference to the following embodiments, however, it is not limited to these embodiments.

### <Embodiment 1>

A potherb mustard (mizuna), a Japanese mustard spinach (komatuna), a rocket, a mibuna as a cruciferous family were cultivated as follows. First, the plant was cultivated without replenishing any nutrient solution at the initial cultivation stage. The plant was cultivated with replenishing the fresh nutrient solution of an amount corresponding to a spontaneous loss in the nutrient solution at the middle cultivation stage. The plant was cultivated with compulsorily discharging the nutrient solution and replenishing the fresh nutrient solution of an amount more than the spontaneous loss in the nutrient solution at the later cultivation stage. The nutrient solution was circulated with a flow rate of 0.87L/s and the nutrient solution was replenished once a day, in case of replenishing the nutrient solution.

The nutrient solution having compositions described in Table 1 is used and a progress of cultivation is shown in Table 2.

**[Table 1]**

| | NO₃-N | NH₄-N | P | K | Ca | Mg | Mn | B |
|---|---|---|---|---|---|---|---|---|
| unit | Me/l | Me/l | Me/l | Me/l | Me/l | Me/l | ppm | ppm |
| cruciferous | 16 | 1.3 | 4 | 9 | 7 | 3 | 1.5 | 1.5 |

**[Table 2]**

| day | replenished liquid amount | EC | pH |
|---|---|---|---|
| 1 | - | 2.0 | 5.5 |
| 2 | - | - | - |
| 3 | spontaneous loss | 2.1 | 5.6 |
| 4 | - | 2.0 | 5.7 |
| 5 | - | 2.0 | 5.8 |
| 6 | - | 2.0 | 5.9 |
| 7 | - | - | - |
| 8 | 10% | 1.8 | 5.8 |
| 9 | - | 1.8 | 5.9 |
| 10 | 20% | 1.7 | - |
| 11 | 20% | 1.8 | 5.9 |
| 12 | 20% | 1.7 | 6.0 |
| 13 | 20% | 1.7 | 6.1 |

In Table 2, EC indicates an electric conductivity of the nutrient solution and is a value correlating with a concentration of the nutrient solution. In addition, what the replenished liquid amount is 10% means that an amount corresponding to 10% of the circulating nutrient solution is exchanged in addition to the spontaneous loss with the fresh nutrient solution, and what the replenished liquid amount is 20% means that an amount corresponding to 20% of the circulating nutrient solution is exchanged in addition to the spontaneous loss with the fresh nutrient solution.

As shown in Table 2, the plant had been cultivated for 13 days and was harvested at the 14th day. The harvested plant was not only in a good nutritional state but also a good eating quality. In addition, a necessary amount of the nutrient solution was less than that of a conventional method.

### <Embodiment 2>

In addition to a potherb mustard, a Japanese mustard spinach, a rocket, a mibuna or the like (a cruciferous family), a lettuce, and an edible chrysanthemum or the like (a compositae family) were cultivated under the same condition as that of the embodiment 1. The nutrient solution having compositions described in Table 3 was used for the plant of the compositae family at a time of initiating cultivation and the nutrient solution having the same compositions as that was used for the plant of the cruciferous family was used as the nutrient solution for replenishment A progress of cultivation is shown in Table 4.

**[Table 3]**

| | NO₃-N | NH₄-N | P | K | Ca | Mg | Mn | B |
|---|---|---|---|---|---|---|---|---|
| unit | Me/l | Me/l | Me/l | Me/l | Me/l | Me/l | ppm | ppm |
| Chrysanthemum initial stage | 16 | 0.13 | 3.1 | 10 | 7 | 3 | 1.5 | 1.5 |

**[Table 4]**

| | compositae | | | cruciferous | | |
|---|---|---|---|---|---|---|
| days | EC | pH | replenished liquid amount (L) | EC | pH | replenished liquid amount (L) |
| 0 | 2 | 5.9 | - | 2 | 5.4 | - |
| 1 | 2 | 6.1 | 5 | 2 | 5.6 | 5 |
| 2 | - | - | | - | - | - |
| 3 | 1.95 | 5.9 | 5 | 1.9 | 5.6 | 5 |
| 4 | - | - | - | - | - | - |
| 5 | 2 | 6 | 5 | 1.9 | 5.8 | 5 |
| 6 | - | 5.8 | - | 1.8 | 6 | 5 |
| 7 | 2 | 5.8 | 3 | 1.8 | 6 | 5 |
| 8 | 2 | 5.9 | 6(10%) | 1.8 | 6.1 | 8(10%) |
| 9 | 2 | 6 | 8(10%) | 1.75 | 6.5 | 10(10%) |
| 10 | 2 | 5.7 | 7(10%) | 1.85 | 6.4 | 12(20%) |
| 11 | 2.2 | 5.6 | 8(10%) | 1.9 | 6.4 | 13(20%) |
| 12 | 2.1 | 5.5 | 8(10%) | 1.85 | 6.1 | 15(20%) |
| 13 | 2.1 | 5.7 | 8(10%) | 1.9 | 6 | 15(20%) |
| 14 | - | - | 8(10%) | - | - | 15(20%) |
| 15 | 2 | 5.5 | 8(10%) | 1.8 | 5.7 | 12(20%) |

As shown in Table 4, the plant had been cultivated for 15 days and was harvested at the 16th day. The harvested plants, both the plant of the cruciferous family and the plant of the compositae family were not only in a good nutritional state but also a good eating quality. In addition, a necessary amount of the nutrient solution was less than that of a conventional method.

### POSSIBLE APPLICATIONS IN INDUSTRY

As mentioned, in accordance with this invention, it is possible to adjust a nutritional condition more sensitively tailored to a growth state of the plant, and the taste of the plant is also improved dramatically if the plant is for food. In addition, since it is possible to reduce a total amount of the nutrient solution used from an initiation of cultivation to a harvest compared with a conventional method of supplying the nutrient solution in a lump, it is also superior from the aspect of a cost.

## Claims

1. A method of hydroponically cultivating a plant to supply the plant with a nutrient solution, wherein
the plant is cultivated without replenishing a fresh nutrient solution at an initial cultivation stage,
the cultivation is continued with the fresh nutrient solution replenished by an amount compensating for a spontaneous loss in the nutrient solution at a medium cultivation stage, and then
the cultivation is conducted with the fresh nutrient solution replenished by an amount exceeding the spontaneous loss in the nutrient solution at a later cultivation stage, and
the amount of the fresh nutrient solution replenished at the later cultivation stage is increased as the cultivation proceeds.

2. The method of hydroponically cultivating a plant described in claim 1, wherein
the fresh nutrient solution is replenished while the nutrient solution is discharged at the later cultivation stage.

3. The method of hydroponically cultivating a plant described in claim 2, wherein
the nutrient solution is supplied to the plant while circulating the nutrient solution, a plurality of tanks are arranged on a flow channel for circulation of the nutrient solution, and the nutrient solution is discharged from the tank locating at the most upstream side, and the fresh nutrient solution is replenished to the tank locating at the most downstream side among a plurality of the tanks.

4. The method of hydroponically cultivating a plant described in claim 3, wherein
the fresh nutrient solution replenished to the tank locating at the most downstream side is replenished from a nutrient solution preparing device through a flow channel different from the above-mentioned flow channel for circulation of the nutrient solution.

5. The method of hydroponically cultivating a plant described in claim 1, and
furthermore, comprising a process of supplying only water to the plant that is about to be harvested.

6. The method of hydroponically cultivating a plant described in claim 5, and
comprising a process of leaving the above-mentioned plant about to be harvested as it is after the water is discharged, next to the process of supplying only water to the plant
